# EUROPEAN PATENT APPLICATION

(11) **EP 3 267 557 A1**
(43) Date of publication of application: **10.01.2018**
(21) Application number: 16178503.5
(22) Date of filing: 07.07.2016
(51) Int. Cl.: H02J 9/06

(54) **UNINTERRUPTIBLE POWER SUPPLY**

(71) Applicant: Liran, Abraham, 6912219 Tel Aviv (IL)
(72) Inventor: Liran, Abraham, 6912219 Tel Aviv (IL)
(74) Representative: Balder IP Law, S.L.

(57) **Abstract**

An uninterruptible power supply (UPS) is disclosed, comprising an electric generator, a flywheel configured to store a rotational energy and coupled to the electric generator through a gear mechanism, a mechanical motor mechanically coupled to rotate the flywheel, and a control unit. The control unit is configured, upon detecting utility line failure, to cause the gear mechanism to transfer rotational energy stored in the flywheel to the electric generator and to cause the mechanical motor to rotate the flywheel so as to preserve the flywheel ability to transfer rotational energy to the electric generator until a backup generator achieves the adequate speed for driving the electric generator.

## Description

### FIELD OF THE INVENTION

The present invention relates generally to uninterrupted power supplies, and more particularly, to methods and systems for supplying uninterrupted high power using a flywheel.

### BACKGROUND OF THE INVENTION

Computers and other devices that are used in applications such as medical imaging, data communication, data processing and more, demand an uninterrupted and stable mains power supply, normally supplied from some utility line. To achieve this, high quality regulated power backup systems are required, that would uninterruptedly replace the utility line whenever the main's voltage either fluctuates, deviates from allowed parameter range or fails. Such deviation may be, for example, a frequency shift higher than +/- 1Hz.

When a gas or diesel engine is used to rotate a backup electric generator in order to supply electric power to a load, instead of a failed utility line, the amount of consumed gas or fuel should be proportional to the consumed load power. However, there is typically a response time delay from the moment of connecting the load to the generator, or the moment of an abrupt change of the load, until the engine control loop adjusts the exact rate of fuel or gas needed to sustain the actual load power. During this time delay, the voltage and frequency supplied to the load might deviate from their allowed range, which may be harmful to the load. Therefore, power regulation means capable of correcting the electric generator fluctuations are typically required.

One of the methods known in the art for stabilizing the power supplied by electric generators is using capacitors and/or rechargeable batteries. However, these solutions are very expensive and inefficient for power supplies of above 300 KW.

British patent 1309858 discloses a power supply method for ensuring uninterrupted power supply to the load. This method provides partial compensation for voltage drops by connecting an auxiliary power supply to the load via a secondary winding of a transformer. The primary winding of the transformer is connected to a choke located between the utility line and the power supply. This kind of machine requires Batteries and a DC to AC electronic inverter. For high power applications above 300 KVA this approach is very expensive, unreliable and requires a large space for batteries.

Patent applications WO/2010/092580 and US 20030137196 disclose uninterruptible power supply system wherein upon a failure of the utility supply, a rotating flywheel drives a synchronous generator until a standby diesel or gas engine reaches the speed required for substituting the flywheel. Using a flywheel provides the system with immediate response in case of utility supply failure. However, the response latency of the engine, which may typically last several seconds, implies high rotational energy to be stored in the flywheel, which implies a cumbersome and costly flywheel arrangement.

Thus, improved techniques are needed in the art to realize a reliable flywheel based uninterruptible power supply, that would minimize the costly implications of using a high-energy flywheel.

### SUMMARY OF THE INVENTION

Accordingly, it is a principal object of the present invention to provide improved methods and systems relating to reliable uninterruptible power supply, comprising a relatively small flywheel. Thus, in accordance with an embodiment of the present invention, an uninterruptible power supply (UPS) is disclosed, comprising:
a transfer switch connected to transfer electric power from an input port of the UPS to an output port of the UPS;
an electric generator comprising a voltage port electrically coupled to the UPS output port;
a flywheel configured to store a rotational energy and coupled to the electric generator through a gear mechanism;
a mechanical motor mechanically coupled to rotate the flywheel; and
a control unit configured to perform the steps of:
   constantly monitoring an input voltage on the UPS input port; and
   upon detecting deviation of one or more parameters of the input voltage from a predefined allowed range thereof, proceeding to the steps of:
      opening the transfer switch;
      causing the gear mechanism to transfer rotational energy stored in the flywheel to the electric generator so as to cause the electric generator to maintain an output voltage at the UPS output port uninterrupted;
      starting the mechanical motor; and
      causing the mechanical motor to rotate the flywheel so as to preserve the flywheel ability to transfer rotational energy to the electric generator in a rate needed to maintain the output voltage at the UPS output port uninterrupted;

In typical embodiments, the input voltage is an AC three-phase voltage and the electric generator is a synchronous machine.

In some embodiments, the gear mechanism comprises a brake part configured to couple between a shaft of the electric generator and a frame of the UPS, and the control unit is further configured to perform the step of activating said brake part so as to suppress fluctuations in the rotation rate of the electric generator.

In some embodiments, the UPS further comprises a backup engine mechanically coupled to rotate the electric generator shaft, and the control unit is further configured to perform the steps of:
starting the backup engine; and
when the backup engine reaches the rotation rate appropriate for rotating the electric generator in a rate needed to maintain the output voltage at the UPS output port uninterrupted, decreasing the output power of the mechanical motor to a minimum needed to maintain a predefined rotation rate of the flywheel.

In some of these embodiments, the UPS further comprises an electric motor mechanically coupled to rotate the flywheel, and the control unit is further configured to cause the electric motor to rotate the flywheel when either the transfer switch is closed or the backup engine drives the electric generator, such that the minimum output power of the mechanical motor needed to maintain the predefined rotation rate of the flywheel is zero.

In some embodiments, the UPS further comprises a backup engine coupled to rotate a shaft of an additional electric generator, said additional electric generator coupled to the UPS output port through an additional electric generator switch, wherein the control unit is further configured to perform the steps of:
starting the backup engine; and
upon detecting that the additional electric generator has reached the same voltage, frequency and phase as in the UPS output port, closing the additional electric generator switch.

In some of these embodiments, the UPS further comprises an electric motor mechanically coupled to rotate the flywheel, and the control unit is further configured to cause the electric motor to rotate the flywheel when either the transfer switch or the additional electric generator switch is closed, such that the minimum output power of the mechanical motor needed to maintain the predefined rotation rate of the flywheel is zero.

In some embodiments, the UPS further comprises a valve configured to conduct a pressurized material emanating from the mechanical motor, and the control unit is configured to perform the step of starting the mechanical motor by opening the valve.

In some embodiments, the control unit is further configured to control the UPS such that as long as the transfer switch is closed, the control unit constantly adjusts the gear mechanism so as to minimize the current flowing through the voltage port of the electric generator.

In some embodiments, the control unit is further configured to control the UPS such that as long as the transfer switch is closed the control unit maintains the gear mechanism inactive so as to prevent rotational energy transfer from the flywheel to the electric generator.

In some embodiments, the electrical port of the electric generator is electrically coupled to the UPS output port through an electric generator switch, and the control unit is further configured to control the UPS such that as long as the transfer switch is closed, the control unit holds the electric generator switch open and constantly adjusts the gear mechanism such that the voltage at the electrical port of the electric generator is maintained in phase with the UPS output voltage.

In typical embodiments, the mechanical motor comprises one of a hydraulic motor and a pneumatic motor.

In some embodiments, the gear mechanism comprises at least one induction coil carrying a DC current and a plurality of magnetic-conducting bars moving in a magnetic field generated by the at least one induction coil.

In these embodiments, the DC current is produced by a transformer comprising a primary winding carrying an AC current and a secondary winding carrying an induced AC current, the coils rotating one relative to the other, and a rectifying circuit configured to rectify the induced AC current.

In accordance with an embodiment of the present invention, there is further provided a method of controlling an uninterruptible Power supply (UPS), the UPS comprising:
a transfer switch connected to transfer electric power from an input port of the UPS to an output port of the UPS;
an electric generator comprising an AC port electrically coupled to the UPS output port;
a flywheel configured to store a rotational energy and coupled to the electric generator through a gear mechanism; and
a mechanical motor mechanically coupled to rotate the flywheel;
the method comprising the steps of:
   constantly monitoring an input voltage on the UPS input port; and
   upon detecting deviation of one or more parameters of the input voltage from a predefined allowed range thereof, proceeding to the steps of:
      opening the transfer switch;
      causing the gear mechanism to transfer rotational energy stored in the flywheel to the electric generator so as to cause the electric generator to maintain an output voltage at the UPS output port uninterrupted;
      starting the mechanical motor; and
      causing the mechanical motor to rotate the flywheel so as to preserve the flywheel ability to transfer rotational energy to the electric generator in a rate needed to maintain the output voltage at the UPS output port uninterrupted.

These and other features and benefits of the invention disclosed herein will be more fully understood upon consideration of the following description and the accompanying drawings.

### BRIEF DESCRIPTION OF THE DRAWINGS

For a better understanding of the invention with regard to the embodiments thereof, reference is made to the accompanying drawings, in which like numerals designate corresponding elements or sections throughout, and in which:
Fig. 1A is a block diagram that schematically illustrates an uninterruptible power supply system, in accordance with an embodiment of the present invention;
Fig. 1B is a block diagram that schematically illustrates an uninterruptible power supply system, in accordance with an alternative embodiment of the present invention; and
Fig. 2 shows a flowchart that schematically illustrates a method for supplying uninterrupted power, in accordance with an embodiment of the present invention.

### DETAILED DESCRIPTION OF EMBODIMENTS

Embodiments of the present invention provide improved Uninterruptible Power Supply (UPS) solutions. Such a solution typically comprises an electric generator, mostly a Synchronous Generator (SG) which, upon detecting a mains voltage failure, substitutes the utility line that normally supplies the mains voltage. Simultaneously, a constantly rotating flywheel starts driving the SG. This drive is needed during several seconds, typically up to ten seconds, until a standby engine reaches the exact speed required to take over the SG drive. In the disclosed UPS, also a standby hydraulic motor is started upon detecting the mains voltage failure. Consequently, the flywheel needs to drive the SG, and actually to supply the UPS load power, only until the hydraulic motor is ready to take over this role. As the hydraulic motor latency is typically less than one second, a relatively low energy flywheel is needed, which is especially important when the load power is over 1MW. It should be noted that the weight and cost of the added hydraulic motor are much smaller than those saved by using a lower energy flywheel. In the present description, voltage failure at a given port means deviation of this voltage from a proper value, which is characterized by deviation of one or more parameters from a predefined allowed range thereof. Example allowed range may be voltage variation of up to +/-10%, frequency variation of up to +/-1Hz and the like

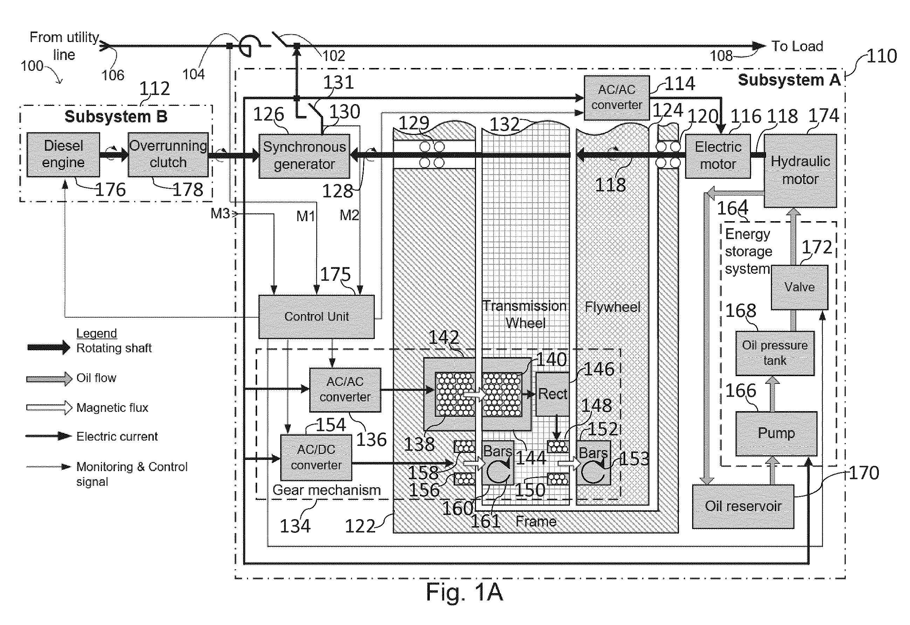

Referring now to Fig. 1A there is shown a block diagram that schematically illustrates a UPS system 100, in accordance with an embodiment of the present invention. The following explanation focuses on the interconnectivity and interrelations between the various elements composing the UPS, while their exact functionality will be described later. Part of the elements are illustrated in crosssconnection view.

In the figure, a transfer switch 102 is connects, through an RF chock 104, between an input port 106 of the UPS and an output port 108 of the UPS. In typical embodiments, input port 106 receives a mains three-phase input voltage from a utility line. In other embodiments, the mains voltage has a single phase. When there is a proper mains voltage at the input port, which is the normal operating condition of UPS 100, transfer switch 102 is closed, thereby maintaining an output voltage at output port 108 that is equal to the input voltage. This voltage feeds a three-phase load, not shown in Fig. 1A. The other UPS elements are logically divided to a subsystem A, indicated by reference numeral 110, and a subsystem B, indicated by reference numeral 112.

Within subsystem 110, an AC/AC converter 114 outputs electrical power at frequency that is appropriate to drive an electric motor 116 at a desired rotation speed, 2400rpm in the described embodiment. Electric motor 116 rotates a motor shaft 118, which is attached, through a bearing 120, to a frame 122 of UPS 100. A flywheel 124, attached to motor shaft 118, thereby also rotates in 2400rpm. An SG 126 has a rotor, not shown in Fig. 1A, that is attached to an SG shaft 128. SG shaft 128 is attached to frame 122 through a bearing 129. SG 126 has an SG voltage port 130 connected to output port 108. In some embodiments SG AC port 130 is connected to output port 108 through an SG switch 131 to allow operation in an offline mode as explained below. Also attached to SG shaft 128 is a transmission wheel 132, which rotates together with the rotor in about 900rpm in the described embodiment. Each of wheels 124 and 132 are partly shown in Fig. 1A for simplifying the drawing. In some embodiments, electric motor 116 receives DC voltage from converter 114.

The rotation rate difference of about 1500rpm between flywheel 124 and transmission wheel 132 is transformed to a magnetic coupling that exerts an adjustable torque on transmission wheel 132. This is done by means of a gear mechanism 134, whose description follows. In gear mechanism 134, a switching AC/AC converter 136, fed from output port 108, supplies an AC current to a transformer comprising a primary winding 138, a secondary winding 140 and iron laminations 142 and 144. Laminations 142 and 144 constitute an iron core of transformer 138/140. In the described embodiment, the AC frequency at the output of converter 136 is at the vicinity of the mains frequency in order to minimize the magnetic loss in iron laminations 142 and 144. The main role of converter 136 is to adjust the torque exerted on transmission wheel 132, which is proportional to the AC current that converter 136 supplies to primary winding 138, as explained in the following.

Primary winding 138 and iron laminations 142 are dipped in a circular groove in frame 122. This groove faces a similar mate circular groove that is grooved concentric to and on the surface of transmission wheel 132 and contains secondary winding 140 and iron laminations 144. When an AC current flows in primary winding 138 it generates an alternating magnetic field in iron laminations 142 and 144, which is not influenced by the rotation of transmission wheel 132 relative to frame 122. The alternating magnetic field causes an induced AC current in secondary winding 140, which is rectified by a rectifier 146. The rectified DC current flows now through induction coils 148 and 150, which are connected in parallel to each other. Each of coils 148 and 150 is dipped in a circular concentric groove close to the circumference of transmission wheel 132 at its surface that faces flywheel 124. The current through induction coils 148 and 150 generates approximately uniform magnetic field directed toward flywheel 124. In flywheel 124, opposite to induction coils 148 and 150, there is a circular concentric groove filled with bars 152. Bars 152 are made of a good magnetic-conducting metallic material. In typical embodiments, the relative permeability of the bars is above 100. Consequently, their motion perpendicularly to the magnetic field, in a velocity determined by the above rotation rate difference, causes a current loop 153 within each of them. These currents flowing within the magnetic field cause a force that resist the force that caused their generation, which means a torque that flywheel 124 exerts on transmission wheel 132. This torque actually constitutes a clutch function whose coupling force is proportional to the magnetic field, hence to the current supplied by AC/AC converter 136.

The above describes an accelerator part of gear mechanism 134, i.e. its ability to cause flywheel 124 to accelerate transmission wheel 132, hence SG 126. The following explains a brake part of gear mechanism 134: An AC/DC converter 154 is fed from output port 108 and, upon brake activation, applies DC current through induction coils 156 and 158, which are also dipped in circular grooves on frame 122 surface. This current causes a magnetic field that couples between SG shaft 128 and frame 122 by causing a braking torque on transmission wheel 132 due to current loops 161 flowing within bars 160 in the transmission wheel.

Subsystem 110 further comprises a fast backup part, whose description follows, based on an energy storage system 164. This system comprises an oil pump 166, which is configured to press oil into an oil pressure tank 168 and to constantly maintain high pressure of the oil in the tank. Oil pressure tank 168 also contains a gas, nitrogen in the described embodiment, which is compressed by the oil exert a counter pressure on the oil. Pump 166 pumps the oil from an oil reservoir 170. When there is a need for fast utility backup, electric motor 116 is immediately deactivated since it is normally fed from the mains voltage. Simultaneously, a valve 172 opens and oil rushes out therethrough in very high pressure from tank 168, thereby transferring mechanical power that drives a hydraulic motor 174. Hydraulic motor 174 then rotates motor shaft 118 instead of electric motor 116. The oil then returns to reservoir 170 and continuous to flow circularly. In other embodiments, any other mechanical motor may be employed instead of hydraulic motor 174, driven by any suitable type of mechanical power. The mechanical power may be based on a pressurized material, typically gas or liquid, but other suitable types of mechanical power may be employed. For example, in one embodiment pump 166 is an air compressor, tank 168 is a compressed air tank, motor 174 is a pneumatic motor and compressed air provides the mechanical power that operates pneumatic motor 174. In the last embodiment, there is no need for reservoir 170.

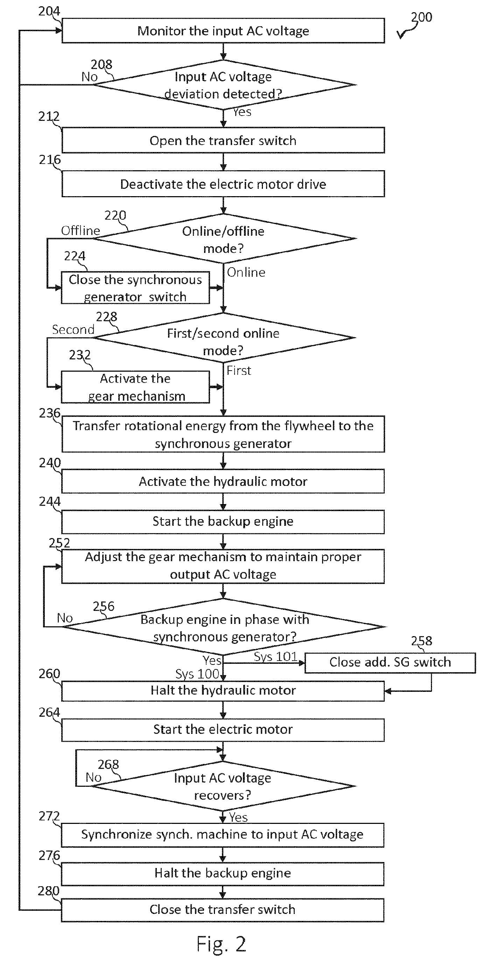

A control unit 175, also included in subsystem 110, is responsible for controlling the operation of all the controllable elements in system 100, as detailed in the explanation of Fig. 2 hereinafter. Not all the control lines emanating from control unit 175 are shown in Fig. 1A. For its operation, control unit 175 monitors sample signals in monitoring points such as M1, M2, and M3. In the described embodiment, control unit 175 comprises a programmable processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory. In some embodiments control unit 175 also comprises attached or embedded hardware modules for accelerating its operation. These modules may comprise discrete components, one or more Field-Programmable Gate Arrays (FPGAs) and/or one or more Application-Specific Integrated Circuits (ASICs).

System 100 also contains, in subsystem 112, a backup engine 176 coupled to rotate the rotor of SG 126 through an overrunning clutch 178. In the described embodiment, backup engine 176 comprises a diesel engine, as shown in Fig 1A. In other embodiments, any suitable engine, such as gas or petrol engines, may be employed.

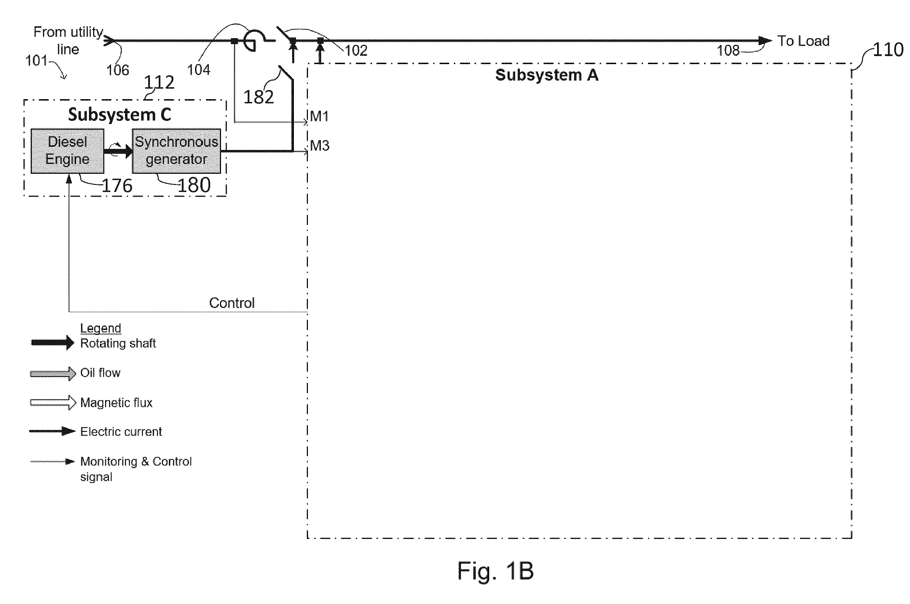

Referring to Fig. 1B, there is shown a block diagram that schematically illustrates an uninterruptible power supply system 101, in accordance with an alternative embodiment of the present invention. System 101 differs from system 100 in that upon mains voltage failure, backup engine 176 drives an additional SG 180 instead of driving SG 126. SG 180 is connected to output port 108 through an additional SG switch 182. Employing the additional SG 180 allows for installing backup engine 176 remote to subsystem 110.

In some embodiments, AC/AC converter 114 and electric motor 116 are not employed and only hydraulic motor 174 serves to constantly rotate flywheel 124 in its predefined rotation rate. When flywheel 124 does not have to supply the load power through transmission wheel 132 and synchronous generator 126, control unit 175 adjusts valve 172 to drive hydraulic motor 174 with the minimum output power needed to maintain the predefined rotation rate of the flywheel. This is actually the case when either transfer switch 102 is closed or, in system 100 backup engine 176 drives SG 126 through overrunning clutch 178 and in system 101 additional SG switch 182 is closed.

The arrow directions in Figs. 1A and 1B represent the transfer direction of the information and signals mentioned above, although transfer in opposite directions may also take place. The above description has focused on the specific elements that are essential for understanding certain features of the disclosed techniques. Conventional elements of the described systems that are not needed for this understanding have been omitted from Figs. 1A and 1B for the sake of simplicity but will be apparent to persons of ordinary skill in the art. The configurations shown in Figs. 1A and 1B are example configurations, which were chosen purely for the sake of conceptual clarity. In alternative embodiments, any other suitable configurations, element types and parameter values may be used.

In Fig 2, there is shown a flowchart 200 that schematically illustrates a method for operating systems 100 and 101, in accordance with an embodiment of the present invention. An embodiment may support one or more of the following three operating modes comprised in the described method:
(a) Offline mode: In normal conditions, i.e. when there is proper mains voltage, control unit 175 holds SG switch 131 open and constantly adjusts gear mechanism 134 so as to synchronize the voltage at SG AC port 130 to be in phase with the UPS output voltage. Control unit 175 normally performs this adjustment by accelerating or slowing down transmission wheel 132 through AC/AC converter 136.
(b) First online mode: Online mode is characterized by being SG switch 131 always closed (it is actually open only until control unit 175 first synchronizes SG 126 with the mains voltage). In the first online mode, in normal conditions control unit 175 maintains SG switch 131 closed and constantly adjusts the gear mechanism so as to minimize the current flowing through the SG AC port 130.
(c) Second online mode: In this mode, in normal conditions control unit 175 maintains SG switch 131 closed. It also maintains gear mechanism 134 inactive, by inhibiting the outputs of converter 136, so as to prevent rotational energy transfer from the flywheel to transmission wheel 132. In this mode, SG 126 functions as a non-loaded motor.

The method shown in flowchart 200 begins with a monitoring step 204, in which control unit 175 constantly monitors the input voltage at input port 106 (M1). While in the monitoring step, control unit 175 constantly ascertains that proper voltage is supplied to the load. In a decision step 208, when control unit 175 detects a deviation as defined above, it infers that the mains voltage has failed and get into a backup state on the UPS. The method then proceeds to an opening step 212, in which control unit 175 opens transfer switch 102 in order to disconnect the UPS from the failed utility line. In a deactivating step 216 that follows, control unit 175 deactivates electric motor 116 by inhibiting the output signal of AC/AC converter 114, in order to allow hydraulic motor 174 to rotate motor shaft 118 (this is further explained below).

Decision steps 220 and 228 that follow distinguish between the three aforementioned operating modes. In the offline mode, the method proceeds to a closing step 224, in which control unit 175 closes SG switch 131 for connecting SG 126 to output port 108. In the second online mode, the method proceeds to an activating step 232, in which control unit 175 activates gear mechanism 134, by enabling the output of AC/AC converter 136, to turn SG 126 from motor mode to generator mode. In the first online mode, SG 126 is already driven through gear mechanism 134, thus the method proceeds directly to the next step. Here, in a transferring step 236, control unit 175 controls gear mechanism 134 to transfer the exact rotational power that is needed to SG 126 for retaining its rotation rate. This way the UPS output voltage is maintained uninterrupted, i.e. proper and free of fast phase or voltage transitions.

Control unit 175 then activates hydraulic motor 174, in an activating step 240, and starts backup machine 176 in a starting step 244. The hydraulic motor activation is achieved by opening valve 172. In an adjusting step 252, control unit 175 constantly checks M2 and adjusts gear mechanism 134, when needed, so as to maintain proper output voltage at output port 108. In typical embodiments, the deviation criteria for considering the UPS output voltage proper may be somewhat different in backup and in normal conditions. For example, within backup state, control unit 175 would adjusts gear mechanism 134 upon a smaller frequency deviation than the frequency deviation that would cause transition to backup state. In particular, in the case that the current consumed by the load drops arbitrarily, control unit 175 would activate the brake part of gear mechanism 134 by causing AC/DC converter 154 to output an appropriate voltage. This is needed in order to suppress positive fluctuation in the rotation rate of SG 126 that would typically result due to the drop in load current.

While maintaining proper output voltage at output port 108, control unit 175 constantly checks, in a decision step 256, whether backup engine 176 has reached synchronization in frequency and phase with SG 126, so that it is eligible to drive SG 126 in system 100 or SG 180 in system 101 respectively. Backup engine 176 then substitutes hydraulic motor 174 as the power source of system 100 or 101. In system 100, control unit 175 performs the above check by initiating short drops in the coupling of gear mechanism 134. In system 101, control unit 175 performs the check by comparing the frequency and phase difference between monitoring points M2 and M3. Upon detecting a positive answer in step 256 the method proceeds, in system 100, directly to step 260. In system 101, the method reaches step 260 through a closing step 258, in which control unit 175 first closes additional SG switch 182.

In a halting step 260, control unit 175 halts hydraulic motor 174 by closing valve 172, since backup engine 176 has already started rotating SG 126/180 in system 100/101 respectively. At the same time, in a starting step 264, control unit 175 starts driving electric motor 116 by means of AC/AC converter 114 for preserving the rotational energy of flywheel 124. In a decision step 268 control unit 175 constantly monitors M1 for detecting when the input voltage at input port 106 recovers. Upon detecting proper input voltage, control unit 175, in a synchronizing step 272, controls the rotation speed of backup engine 176 so as to synchronize the UPS output voltage with the input voltage. Then, upon reaching synchronization, control unit 175 simultaneously halts backup engine 176 in a halting step 276 and closes transfer switch 102 in a closing step 280. In system 101 control unit 175 also opens additional SG switch 182. As system 100/101 has now resumed normal operation, the flowcharts in Fig. 2 returns to monitoring step 204.

The flowchart shown in Fig. 2 is an example flowchart, which was chosen purely for the sake of conceptual clarity. In alternative embodiments, any other suitable flowchart can also be used for illustrating the disclosed method. Method steps that are not mandatory for understanding the disclosed techniques were omitted from Fig. 3 for the sake of clarity.

In some embodiments, other electric generators may be employed instead of synchronous generator. In particular, when the utility line supplies DC voltage, DC electric generator is typically employed instead of each of SG 126 and additional SG 180. In this case, the criterion for adjusting the voltage at the output of the electric generator is only the DC voltage level at their voltage port, whereas frequency and phase are not relevant. In this case also converters 114, 136 and 154 are configured to receive DC voltage.

Although the embodiments described herein mainly address high power UPS systems, the methods and systems exemplified by these embodiments can also be used in power supply applications. It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

## Claims

1. An uninterruptible Power supply (UPS), comprising:
a transfer switch connected to transfer electric power from an input port of the UPS to an output port of the UPS;
an electric generator comprising an electrical port electrically coupled to the UPS output port;
a flywheel configured to store a rotational energy and coupled to the electric generator through a gear mechanism;
a mechanical motor mechanically coupled to rotate the flywheel; and
a control unit configured to perform the steps of:
constantly monitoring an input voltage on the UPS input port; and
upon detecting deviation of one or more parameters of the input voltage from a predefined allowed range thereof, proceeding to the steps of:
opening the transfer switch;
causing the gear mechanism to transfer rotational energy stored in the flywheel to the electric generator so as to cause the electric generator to maintain an output voltage at the UPS output port uninterrupted;
starting the mechanical motor; and
causing the mechanical motor to rotate the flywheel so as to preserve the flywheel ability to transfer rotational energy to the electric generator in a rate needed to maintain the output voltage at the UPS output port uninterrupted.

2. The UPS of claim 1, wherein the input voltage is a three-phase voltage and the electric generator is a synchronous generator.

3. The UPS of claim 1, wherein the gear mechanism comprises a brake part configured to couple between a shaft of the electric generator and a frame of the UPS, and wherein the control unit is further configured to perform the step of activating said brake part so as to suppress fluctuations in the rotation rate of the electric generator.

4. The UPS of claim 1, further comprising a backup engine mechanically coupled to rotate the electric generator, wherein the control unit is further configured to perform the steps of:
starting the backup engine; and
when the backup engine reaches the rotation rate appropriate for rotating the electric generator in a rate needed to maintain the output voltage at the UPS output port uninterrupted, decreasing the output power of the mechanical motor to a minimum needed to maintain a predefined rotation rate of the flywheel.

5. The UPS of claim 4, further comprising an electric motor mechanically coupled to rotate the flywheel, wherein the control unit is further configured to cause the electric motor to rotate the flywheel when either the transfer switch is closed or the backup engine drives the electric generator, such that the minimum output power of the mechanical motor needed to maintain the predefined rotation rate of the flywheel is zero.

6. The UPS of claim 1, further comprising a backup engine coupled to rotate a shaft of an additional electric generator, said additional electric generator coupled to the UPS output port through an additional electric generator switch, wherein the control unit is further configured to perform the steps of:
starting the backup engine; and
upon detecting that the additional electric generator has reached the same voltage, frequency and phase as in the UPS output port, closing the additional electric generator switch.

7. The UPS of claim 6, further comprising an electric motor mechanically coupled to rotate the flywheel, wherein the control unit is further configured to cause the electric motor to rotate the flywheel when either the transfer switch or the additional electric generator switch is closed, such that the minimum output power of the mechanical motor needed to maintain the predefined rotation rate of the flywheel is zero.

8. The UPS of claim 1, wherein the UPS further comprises a valve configured to conduct a pressurized material emanating from the mechanical motor, and the control unit is configured to perform the step of starting the mechanical motor by opening the valve.

9. The UPS of claim 1, wherein the control unit is further configured to control the UPS such that as long as the transfer switch is closed the control unit constantly adjusts the gear mechanism so as to minimize the current flowing through the electrical port of the electric generator.

10. The UPS of claim 1, wherein the control unit is further configured to control the UPS such that as long as the transfer switch is closed the control unit maintains the gear mechanism inactive so as to prevent rotational energy transfer from the flywheel to the electric generator.

11. The UPS of claim 1, wherein the electrical port of the electric generator is electrically coupled to the UPS output port through an electric generator switch, and the control unit is further configured to control the UPS such that as long as the transfer switch is closed, the control unit holds the electric generator switch open and constantly adjusts the gear mechanism such that the voltage at the electrical port of the electric generator is maintained in phase with the UPS output voltage.

12. The UPS of claim 1, wherein the mechanical motor comprises one of a hydraulic motor and a pneumatic motor.

13. The UPS of claim 1, wherein the gear mechanism comprises at least one induction coil carrying a DC current and a plurality of magnetic-conducting bars moving in a magnetic field generated by the at least one induction coil.

14. The UPS of claim 13, wherein the DC current is produced by a transformer comprising a primary winding carrying an AC current and a secondary winding carrying an induced AC current, the coils rotating one relative to the other, and a rectifying circuit configured to rectify the induced AC current.

15. A method of controlling an uninterruptible Power supply (UPS), the UPS comprising:
a transfer switch connected to transfer electric power from an input port of the UPS to an output port of the UPS;
an electric generator comprising an AC port electrically coupled to the UPS output port;
a flywheel configured to store a rotational energy and coupled to the electric generator through a gear mechanism; and
a mechanical motor mechanically coupled to rotate the flywheel;
the method comprising the steps of:
constantly monitoring an input voltage on the UPS input port; and
upon detecting deviation of one or more parameters of the input voltage from a predefined allowed range thereof, proceeding to the steps of:
opening the transfer switch;
causing the gear mechanism to transfer rotational energy stored in the flywheel to the electric generator so as to cause the electric generator to maintain an output voltage at the UPS output port uninterrupted;
starting the mechanical motor; and
causing the mechanical motor to rotate the flywheel so as to preserve the flywheel ability to transfer rotational energy to the electric generator in a rate needed to maintain the output voltage at the UPS output port uninterrupted.
